# EUROPÄISCHE PATENTSCHRIFT

(11) **EP 0 697 356 B1**
(45) Veröffentlichungstag und Bekanntmachung des Hinweises auf die Patenterteilung: **30.09.1998**
(21) Anmeldenummer: 95111782.9
(22) Anmeldetag: 26.07.1995
(51) Int. Cl.: B65G 61/00, B65G 57/14, B65G 57/20

(54) **Vorrichtung zum Stapeln oder Entstapeln von stapelbarem Gut**
Device for stacking or destacking stackable goods
Dispositif pour empiler ou désempiler des marchandises superposables

(30) Priorität: 27.07.1994 DE 4426615
(43) Veröffentlichungstag der Anmeldung: 21.02.1996
(73) Patentinhaber: Stiny, Ludwig, 83512 Wasserburg/Inn (DE)
(72) Erfinder: Stiny, Ludwig, 83512 Wasserburg/Inn (DE)
(74) Vertreter: Liesegang, Roland, Dr.-Ing.

(56) Entgegenhaltungen:
- DE-A- 2 724 978
- DE-A- 3 208 170
- DE-A- 3 404 278
- DE-A- 3 529 071
- DE-B- 1 282 555
- DE-C- 3 940 865
- DE-U- 7 935 243

## Beschreibung

Die Erfindung betrifft eine Vorrichtung gemäß dem Oberbegriff des Anspruchs 1. Eine Vorrichtung dieser Art ist in der DE-B-12 82 555 beschrieben. Dabei sind jedem zu stapelndem oder entstapelndem Gut zwei Greifvorrichtungen mit Greifern zugeordnet, die von entgegengesetzten Seiten her an dem Gut angreifen.

Bei einer anderen bekannten Vorrichtung gemäß der DE 35 29 071 A1, die nur zum Stapeln, nicht aber zum Entstapeln von Packungseinheiten bestimmt ist, werden Paletten enthaltend die Packungseinheiten mittels jeweils zwei beidseitig unter den Boden der betreffenden Palette greifenden Huborganen, welche von einem ansteigenden Kettenpaar mitgenommen werden, angehoben und nach Passieren des Förderweges unter Horizontalhalten der Palette auf einer mit Packungseinheiten beladenen Palette abgesetzt, die nicht angehoben wurde, sondern auf einer horizontalen, unter der Kettenbahn liegenden Förderbahn in eine Stapelposition transportiert wurde.

Im Stand der Technik unterscheidet man generell zwischen Schichtenpalettierung und Säulenpalettierung.

Bei der Schichtenpalettierung werden jeweils komplette Schichten aus dem palettierbaren Gut, wie Gebinden, Kästen oder Kartons, zusammengestellt und auf eine Palette gesetzt. Gemäß einer ersten Ausführung wird die zusammengestellte Schicht auf ein Übergabeblech oder einen Rollenteppich geschoben. Ein die Palette tragendes Hubwerk fährt unter das Übergabeblech oder den Rollenteppich. Das Übergabeblech oder der Rollenteppich werden zurückgefahren, so daß die komplette Schicht auf die Palette bzw. auf die im vorherigen Arbeitsgang gestapelte Schicht herabfällt.

Bei einer abgewandelten Ausführung wird die auf das Übergabeblech geschobene Schicht von einem Hubwerk über die Palette oder die vorher gestapelte Schicht auf der Palette angehoben und seitlich über die Palette oder die vorherige Schicht gebracht. Darauf senkt das Hubwerk das Übergabeblech mit der darauf liegenden Schicht bis knapp über die darunterliegende Palette oder Schicht ab. Das Hubwerk fährt zurück und die Schicht fällt auf die Palette bzw. die darunterliegende Schicht.

Bei einer weiteren Alternative des Schichtpalettierens wird die zusammengestellte Schicht von Greifern eines Wagen gegriffen. Ein am Wagen angeordnetes Hubwerk hebt die Greifer mit der Schicht bis über die Palette oder über eine gestapelte Schicht auf einer Palettenbahn. Der Wagen fährt über die Palette bzw. die gestapelte Schicht, und das Hubwerk senkt die zusammengestellte Schicht ab, bis diese auf der Palette oder der gestapelten Schicht aufsitzt. Danach öffnen sich die Greifer, das Hubwerk fährt hoch und der Wagen fährt zurück.

Bei der bekannten Säulenpalettierung werden mittels eines Säulenstaplers vertikale Säulen gebildet. Diese Säulen werden zu einer kompletten Palettenladung zusammengestellt und mittels eines Beladers mit Übergabeblech auf die Palette abgesetzt.

Die bekannten Palettiervorrichtungen benötigen normalerweise Übergabevorrichtungen wie Übergabebleche oder Rollenteppiche. In den meisten Fällen, bei denen nicht mit aufwendigen Greifern gearbeitet wird, bedingen die bekannten Palettiervorrichtungen in der Absetzphase ein Herabfallen des zu palettierenden Gutes, was einer schonenden Behandlung kaum zuträglich ist.

Es ist an sich bekannt (DE 27 24 978 A1), stapelbare Kisten mittels je zwei Greiferhaken unteschiedlicher Länge von oben zu greifen, so daß eine Kiste in einer Schräglage über eine darunterliegende Kiste gebracht und abgesetzt wird und anschließend mittels einer von den Greiferhaken gesonderten Zentriervorrichtung in Stapelposition verlagert wird.

Es ist schließlich bekannt (DE 32 08 170 A1), zu stapelndes Gut mittels je zwei sägezahnartig gestalteten Greiferarmen von oben derart zu greifen, daß das Gut über der Stapelposition in Schräglage ist und durch Absenken eines die Greiferarme tragenden Greiferkopfs in die endgültige Stapelposition zentriert wird.

Der Erfindung liegt das Problem zugrunde, eine Vorrichtung der im Oberbegriff des Anspruchs 1 genannten Art und ein Verfahren der im Oberbegriff des Anspruchs 15 beschriebenen Art zum Stapeln und/oder Entstapeln von stapelbarem Gut zu schaffen, mit denen bei einfachem und kostengünstigem Aufbau sowie schonender Behandlung des zu palettierenden Gutes ein Zentrieren des Gutes beim Absetzen sichergestellt werden kann.

Zur Lösung dieser Aufgabe dienen eine Vorrichtung gemäß Patentanspruch 1 und ein Verfahren gemäß Anspruch 15.

Vorteilhaft ist eine Anordnung mit einem Paar parallele, endlose Ketten, zwischen denen die Greifvorrichtungen in regelmäßigen Abständen angeordnet sind. Eine solche Vorrichtung arbeitet nach dem Prinzip eines Paternosters.

Eine Vorrichtung nach der Erfindung kommt mit einem einzigen Antriebsmotor für den Antrieb der Kette bzw. des Kettenpaars und aller sonstigen Baugruppen der Vorrichtung aus. Dieser Antriebsmotor ist dabei zum Palettieren in der einen Drehrichtung und zum Entpalettieren in der anderen Drehrichtung betreibbar.

Eine Stapel- oder Entstapelvorrichtung nach der Erfindung hat geringen Platzbedarf. Sie ist aufgrund ihres einfachen Aufbaus im Vergleich zu den bekannten Vorrichtungen preisgünstiger. Die kontinuierliche Bewegung der Ketten und die "passive" Betätigung der gegen Federkraft ausschwenkbaren Greifvorrichtungen durch seitlich der Kettenbahn ortsfest angeordnete Kulissen und Führungen sorgt für sanfte Bewegungen ohne Stoßbelastung des Gutes sowohl beim Aufnehmen und Absetzen als auch beim Zwischentransport. Ein Fallen des Gutes beim Absetzen ist dabei völlig vermieden.

Aufgrund der Verwendung nur eines einzigen Antriebsmotors ist die Steuerung einfach und der Energieverbrauch niedrig.

Die Erfindung ist im folgenden anhand schematischer Zeichnungen an einem Ausführungsbeispiel mit weiteren Einzelheiten näher erläutert. Es zeigen:
- Fig. 1: eine Seitenansicht einer Palettiervorrichtung gemäß der Erfindung, wobei ein äußeres Gehäuse weggelassen ist zusätzlich eine Palettenbahn zum Bereitstellen von Paletten für das Stapeln des Gutes sowie eine Gutzuführbahn gezeigt sind;
- Fig. 2: eine Ansicht in Richtung des Pfeiles II in Fig. 1, wobei zusätzlich ein Gehäuse der Palettiervorrichtung im Schnitt dargestellt ist;
- Fig. 3 und 4: eine Greifvorrichtung, wobei Fig. 3 die Ruhestellung eines an der Greifvorrichtung schwenkbaren Greifers und Fig. 4 die ausgeschwenkte Greifstellung dieses Greifers darstellen,
- Fig. 5: den Greifer mit seiner Lagerung an der Greifvorrichtung in Einzeldarstellung;
- Fig. 6: die Anbringung einer Seite der Greifvorrichtung an einer der beiden Ketten des Kettenpaars in Draufsicht;
- Fig. 7: die Anbringung nach Fig. 6 in einem Schnitt nach Fig. 6;
- Fig. 8 und 9: eine an der Greifvorrichtung angeordnete Zentriervorrichtung für das Gut in zwei Betriebsstellungen;
- Fig. 10, 11 und 12: eine Greifvorrichtung bei einer abgewandelten Vorrichtung gemäß der Erfindung in drei unterschiedlichen Betriebsstellungen beim Greifen einer Kiste, jeweils in Seitenansicht;
- Fig. 13, 14 und 15: die abgewandelte Vorrichtung zum Stapeln und Entstapeln mit Greifvorrichtung nach Fig. 10 - 12 in Seitenansichten wie Fig. 1 in drei Betriebsstellungen;
- Fig. 16: eine vereinfachte, nur zum Stapeln bestimmte Vorrichtung ähnlich derjenigen nach den Fig. 13, 14 und 15 und
- Fig. 17: eine vereinfachte, nur zum Entstapeln bestimmte Vorrichtung ähnlich derjenigen nach den Fig. 13, 14 und 15.

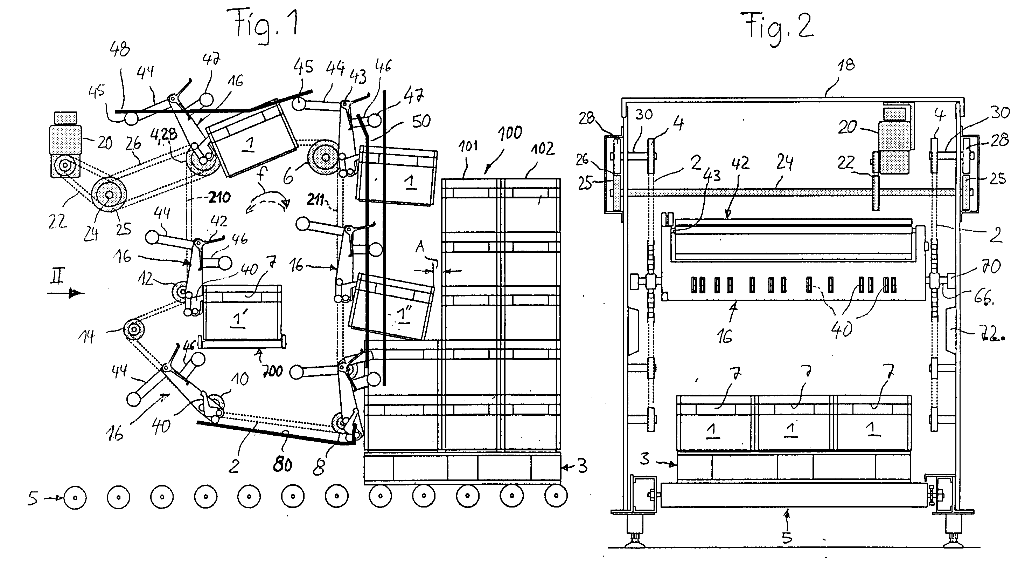

Die in den Fig. 1 und 2 schematisch dargestellte Palettiervorrichtung hat ein Paar endlose Ketten 2, 2, von denen in Fig. 1 nur eine zu sehen ist. Die Ketten laufen um Umlenkräder 4, 6, 8, 10, 12 und sind mittels Spannrad 14 spannbar. Zwischen den Ketten sind in gleichmäßigen Abständen mehrere Greifvorrichtungen 16 um horizontale Achsen schwenkbar gehalten, die von den beiden Ketten 2, 2 zum Palettieren in Richtung des Pfeiles f (Fig. 1) mitgenommen werden.

Die beiden Ketten sind über einen einzigen elektrischen Antriebsmotor 20 antreibbar, der ortsfest an der Oberseite eines nur in Figur 2 geschnitten dargestellten Gehäuses 18 angebracht ist und über einen Kettentrieb 22, eine Welle 24, an den Enden der Welle sitzende Kettenräder 25, Ketten 26, Kettenräder 28 und Antriebswellenstummel 30 auf die jeweiligen Umlenkräder 4 der beiden Ketten 2 zu deren Antrieb wirkt.

Zu jeder Greifvorrichtung 16 gehören um horizontale Achsen schwenkbar angelenkte, gegen Federkraft ausschwenkbare Greifer 40, ebenfalls um horizontale Achsen schwenkbar angelenkte Zentriervorrichtungen 42 und beidseitig wegragende Führungsarme 44, 46 mit an ihren Enden angeordneten Führungsrollen 45, 47. Die Führungsrolle 45 läuft zwangsgeführt an einer ersten, im wesentlichen horizontalen Führung in Gestalt eines Führungsbleches 48 ab, welches ein Ausschwenken der Greifvorrichtung 16 bezüglich der Ketten 2, 2 derart erzwingt, daß eine sichere, schräg nach oben geneigte Transportlage der von den Greifern 40 mitgeführten Kästen 1 gewährleistet ist. Die Führungsrolle 47 des rechts von der Greifvorrichtung 16 wegragenden Führungsarmes 46 ist dazu eingerichtet, mit einer vertikalen zweiten Führung in Form eines Führungsbleches 50 derart zusammenzuwirken, daß die Kästen im absteigenden Trum der Ketten 2, 2 in eine aus Fig. 1 ersichtliche leichte Schräglage zum Absetzen des Gutes 1 auf einer bereitgestellten Palette 3 oder einem bereits gestapelten Kasten 1 mit einem horizontalen Versatz A vor den bereits fertig gestapelten Kastensäulen 101, 102 (wie in Fig. 1 dargestellt) zwangsgeführt wird, damit eine Kollision der zu stapelnden Kästen 1'' mit den fertigen Kastensäulen 101, 102 sicher vermieden wird.

Aus Fig. 2 ist ersichtlich, daß zu jeder Greifvorrichtung 16 mehrere Greifer 40 gehören. Diese Greifer sind in geeigneten Abständen so über die Länge einer Greifvorrichtung 16 verteilt, wie dies in Fig. 2 dargestellt ist, um das Zusammenwirken mit unterschiedlich angebrachten Aussparungen 7 an unterschiedlichen Gebinden zu ermöglichen.

In den Fig. 3 bis 9 sind Einzelheiten der Ausbildung der Greifvorrichtung 16 dargestellt.

Die Fig. 3 bis 5 zeigen die Anbringung und Ausformung des Greifers 40 an der Greifvorrichtung 16. Jeder Greifer 40 ist über einen Schwenkzapfen 50 schwenkbar an der Greifvorrichtung 16 gelagert. Zu dem Greifer 40 gehört ein fest mit dem Schwenkzapfen 50 verbundener Greiferfuß 52 mit Führungsrolle 54, welche mit einer seitlich der Kettenbahn ortsfest angeordneten Kulisse 56 in Abwälzkontakt treten kann. Jeder Greifer 40 hat einen hakenförmigen Greiferkopf 58, der auf dem Schwenkzapfen 50 gegen die Kraft einer Drehfeder 51 ausschwenkbar ist und der zum Eingreifen in eine Aussparung 7 eines zu stapelnden Kastens 1 bemessen ist. Zwischen einem Haltestück 59 der Greifvorrichtung 16 und dem Greiferfuß 52 ist eine Zugfeder 60 angeordnet, die sich in der in Fig. 3 gezeigten Position in (nahezu) entspanntem Zustand befindet.

Wird die Greifvorrichtung 16 aufgrund des Abwälzkontaktes zwischen Kulisse 56 und Rolle 54 in Fig. 4 gesehen ausgeschwenkt, so wird die Zugfeder 60 gespannt. Die zwischen Schwenkzapfen 50 und Greifer 40 zwischengeschaltete Drehfeder 51 ermöglicht dabei ein Ausweichen des Greifers 40 für den Fall, daß er auf keine Ausnehmung 7 getroffen sein sollte.

In der in Fig. 4 gezeichneten Stellung befindet sich der Greifer 40 in Greifposition, in welcher er nach Eindringen in die Ausnehmung 7 eines Kastens 1' diese Ausnehmung wie in Fig. 4 angedeutet zur Mitnahme des Kastens 1' hintergreift. Diese Stellung ist auch in Fig. 1 im linken unteren Bereich des aufsteigenden Kettentrums gezeichnet.

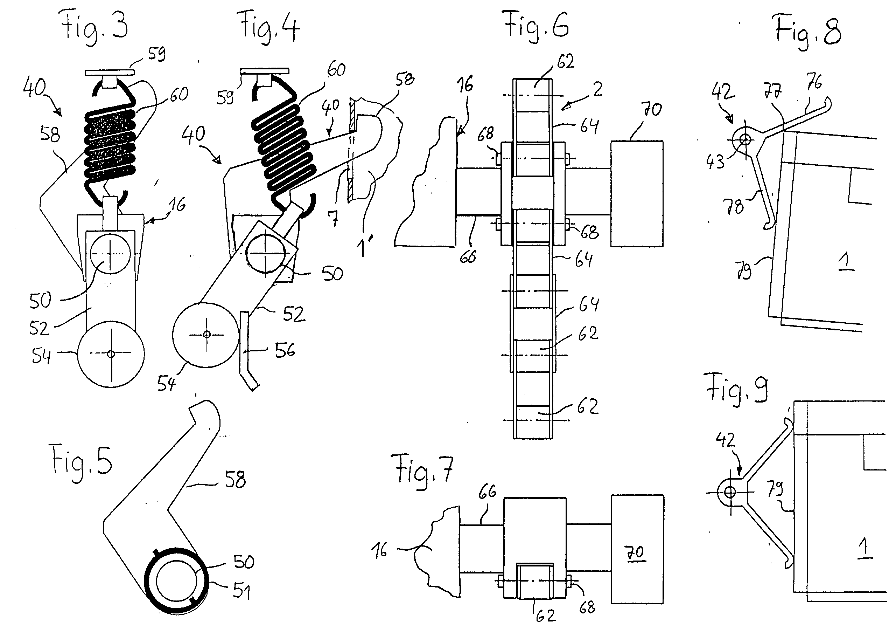

Aus den Fig. 6 und 7 geht der Aufbau der Kette als Rollenkette mit Rollen 62 und Laschen 64 hervor. Zwischen zwei Kettengliedern ist über einen Achszapfen 66 die eine Seite einer Greifvorrichtung 16 mittels Schraubverbindungen 68 fest mit der Kette 2 verbunden. Auf der der Greifervorrichtung 16 abgewandten Seite der Kette 2 trägt das freie Ende des Achszapfens 66 eine Rolle 70 zum Zusammenwirken mit einer innen am Gehäuse 20 angebrachten Führungsleiste 72.

Die Anordnung gemäß den Fig. 6 und 7 wiederholt sich spiegelverkehrt auf der anderen Seite der Greifervorrichtung 16, wie aus Fig. 2 ersichtlich, in der auch die Führungsleiste 72 dargestellt ist.

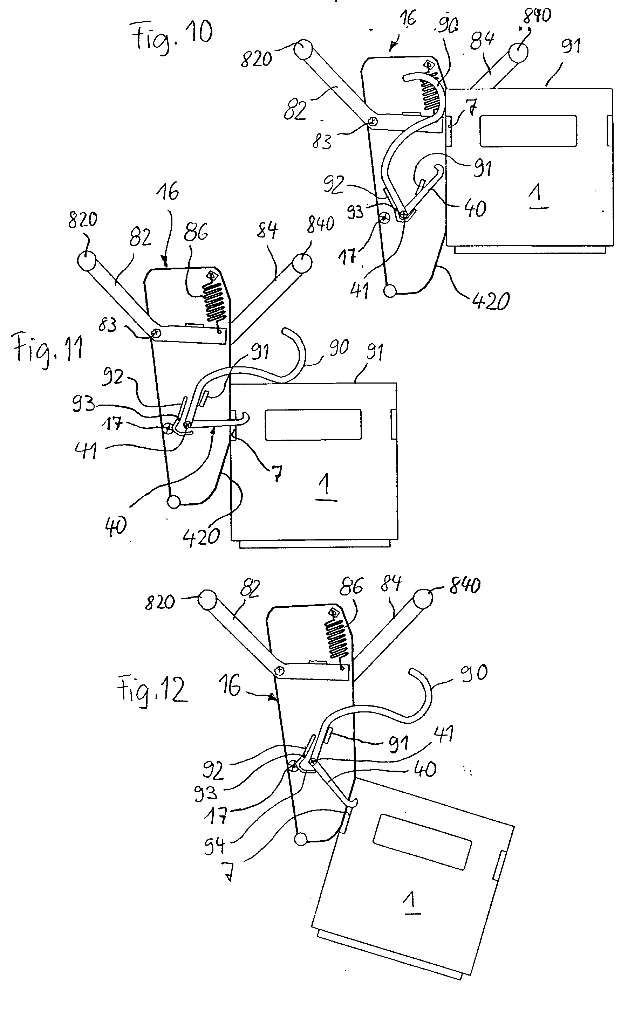

Die Fig. 8 und 9 zeigen in Einzeldarstellungen zwei Betriebsstellungen der Zentriervorrichtung 42, welche um eine horizontale Achse 43 schwenkbar an der hier nicht dargestellten Greifvorrichtung 16 angelenkt ist. Zweck dieser an jeder Greifvorrichtung 16 vorhandenen Zentriervorrichtung 42 ist es, die Greifvorrichtung beim sanften Absetzen zu unterstützen und die Kästen 1'' durch Schieben gegen die fertiggestapelte Säule 101 unter Aufhebung des oben erwähnten Versatzes A anzuschieben. Die Zentriervorrichtung 42 ist dazu als sich über die ganze Breite der Greifvorrichtung (Fig. 2) erstreckendes Winkelblech mit zwei Schenkeln 76 und 78 (Fig. 8) ausgebildet, die einen Öffnungswinkel von etwas mehr als 90° miteinander einschließen. Dieses Winkelblech läuft bei der Abwärtsbewegung der Kästen 1 im absteigenden Trum (rechts in Fig. 1), wenn der Greifer 40 der Greifvorrichtung bereits aus der Aussparung 7 des betreffenden Kastens 1 freigekommen ist, mit dem unteren Schenkel 78 an der Seitenfläche 79 des Kastens 1 sowie mit dem Schenkel 76 an der oberen Eckkante 77 des Kastens 1 auf und schiebt diesen somit bei der weiteren Abwärtsbewegung der Zentriervorrichtung aus der versetzten Position mit Abstand "A" von dem Fertigstapel 101 in die korrekte Position exakt auf einen darunter bereits gestapelten Kasten, wobei die beiden Schenkel längs des Kastens unter Ausübung eines leichten Positionierdruckes über die Seitenfläche 79 und die obere Eckkante 77 des Kastens 1 in die Position gemäß Fig. 9 gleiten, in welcher beide Schenkel 76, 78 der Zentriervorrichtung 42 mit ihren freien, abgerundeten Enden an der Seitenfläche 79 des Kastens gleitend anliegen und der Abstand A aufgehoben ist.

Mit der beschriebenen Vorrichtung wird wie folgt gearbeitet: Auf der Palettenbahn 5 fährt eine leere Palette 3 ein. Gleichzeitig wird ein Kasten 1' auf einer quer zur Palettenbahn 5 verlaufenden und oberhalb der Palettenbahn 5 gelegenen Rollbahn 700 (in Fig. 2 nicht gezeigt) bereitgestellt. Am Ort dieser Bereitstellung läuft nun eine "leere" Greifvorrichtung 16 an der ortsfesten Kulisse 56 zum Ausschwenken des Greifers 40 in die in Fig. 4 dargestellte Mitnahmeposition auf, in welcher der Greifer 40 die Aussparung 7 im mitzunehmenden Kasten 1' hintergreift. Durch die Zugfeder 60 wird der Greifer 40 mit einem den Greifer 40 gegen die Greifervorrichtung 16 vorspannenden Moment belastet, so daß ein nicht in einer Aussparung eingefahrene Greifer selbsttätig wieder gegen seine Ruheposition gemäß Fig. 3 zurückgedrückt wird.

Steht ein Kastenpulk, bestehend z.B. aus drei nebeneinander stehenden Kästen auf der Rollbahn 700 bereit, so startet der Antriebsmotor 18 der Palettiervorrichtung und setzt das Kettenpaar 2, 2 synchron in Richtung des durchgezogenen Pfeiles f in Fig. 1 in Bewegung. Die Greifer 40 werden durch die Kulisse 56 in die Aussparungen 7 der drei Kästen 1 eingeführt und nehmen diese mit nach oben. Aufgrund der Führung der Greifvorrichtung 16 mittels der Rollen 45 an dem horizontalen Führungsblech 48 wird die Greifvorrichtung 16 in eine leichte Schräglage gebracht, in welcher die Kästen 1 während des etwa horizontalen Transportes zwischen den Umlenkrädern 4 und 6 verharren, so daß eine sichere Halterung der Kästen 1 an der Greifvorrichtung 16 gewährleistet ist. Aufgrund des Zusammenwirkens der Führungsrollen 47 mit dem im wesentlichen vertikalen Führungsblech 50 werden die Greifer 40 der Greifvorrichtung anschließend in eine Lage gebracht, in welcher die Kästen 1 leicht nach vorne gegen einen bereits teilweise gebildeten Kistenstapel 100 geneigt sind. Auf den Paletten 3 lassen sich die Kästen nicht oder nur schlecht verschieben. Aus diesem Grund werden die drei zuerst zu stapelnden Kästen in korrekte Endlage auf der Palette 3 ohne Wirksamwerden der Zentriervorrichtung 42 mithilfe einer Kettenumlenkung aus der Vertikalen in eine gebogene, tangential in die horizontale Ebene der Paletten 3 einlaufende Bahn am unteren Ende der Abwärtsförderung gebracht. Die dann folgenden drei Kästen 1'' treffen in einer geneigten Lage mit ihren unteren, in Fig. 1 rechten Kanten auf der bereits gebildeten ersten Kastenreihe auf. Aufgrund der Weiterbewegung der beiden Ketten 2, 2 kommen die Greifer 40 aus den Aussparungen 7 frei und schwenken aufgrund der Federbelastung in die Greifvorrichtung 16 zurück. Die Zentriervorrichtung 42, welche wie anhand der Figuren 8 und 9 beschrieben die teilweise abgesetzte Kastenreihe 1'' kontaktiert hat, schiebt die Kastenreihe in korrekte Position gegen eine bereits gestapelte Kastensäule 101 an.

In einem unteren horizontalen Förderabschnitt 212 des Kettenpaares 2, 2, in welcher die Greifvorrichtungen 16 leer in die Ausgangsposition zum erneuten Aufnehmen eines Kastenpulkes 1' verfahren werden, ist ein drittes Führungsblech 80 so angeordnet, daß die Greifvorrichtungen 16 bei ihrer Bewegung durch diese Strecke praktisch parallel zur Kettenbahn flach gelegt sind, um die Rollbahn 7 auf möglichst geringem vertikalen Abstand oberhalb dieses untersten Förderabschnittes 212 anordnen zu können und so Platz zu sparen.

Das Spiel beginnt nun von neuem.

Ist der letzte Kastenpulk auf eine Säule des Stapels 100 aufgesetzt, dann fährt die beladene Palette 3 zur nächsten Position oder, sofern der Stapel 100 komplett ist, zur nächsten Palettenbahn, so daß eine neue, unbeladene Palette 3 auf der Palettenbahn 5 einfahren kann. Befindet sich eine Greifvorrichtung 16 beladen mit Kästen 1 vor dem absteigenden Trum, d.h. vor der vertikalen Abwärtsbewegung, und ist die Palette 3 noch keine Reihenlänge vorgefahren, so stoppt der Antriebsmotor 20, bis die Palette 3 die erforderliche Strecke zurückgelegt hat. Befindet sich die nächste, mit Kästen 1 beladene Greifvorrichtung vor der Abgabe des ersten Kastenpulks und ist noch keine Palette 3 zum Stapeln vorhanden, so stoppt der Antriebsmotor 20, bis eine unbeladene Palette 3 eingefahren ist. All dies wird durch eine einfache, nicht näher beschriebene Steuerung automatisch bewirkt.

In den Figuren 10 - 17, die abgewandelte Ausführungen der Erfindung darstellen, sind gleiche Teile mit gleichen Bezugszahlen wie in den Fig. 1 - 9 belegt und nur soweit notwendig nochmals beschrieben.

Mehrere in den Fig. 10 bis 12 detailliert gezeigte Greifvorrichtungen sind ebenfalls insgesamt mit der Bezugszahl 16 bezeichnet und werden je um eine horizontale Achse 17 schwenkbar von zwei endlosen Ketten 2,2 einer Fördervorrichtung mitgenommen.

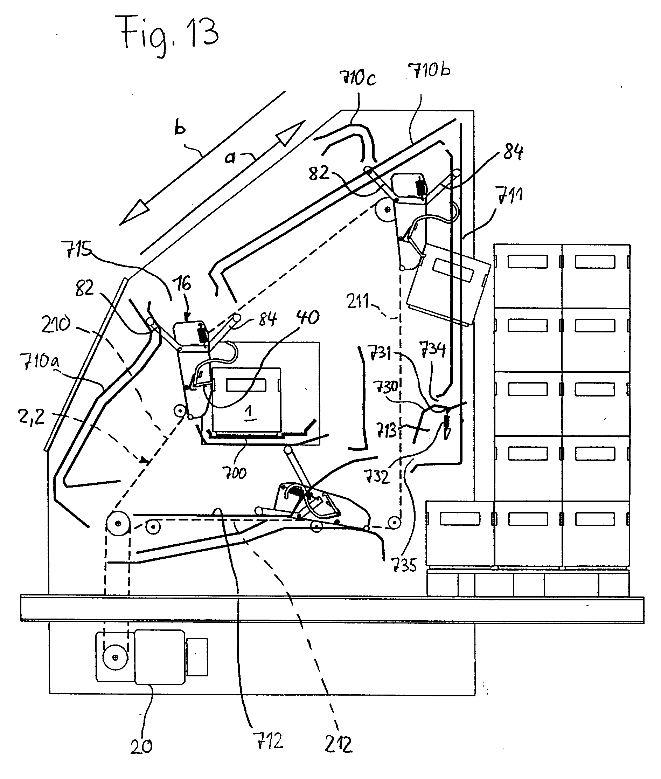

Jede Greifvorrichtung 16 hat einen um den Drehpunkt 83 gegen die Kraft einer Zugfeder 86 schwenkbaren Führungshebel 82 mit Führungsrolle 820 am freien Ende sowie einen starr mit ihr verbundenen Führungshebel 84 mit Führungsrolle 840 am freien Ende. Das Zusammenwirken dieser Führungshebel 82, 84 mit Führungen ist anhand der Fig. 13 bis 17 beschrieben.

Zu jeder Greifvorrichtung 16 gehört ein um einen Drehpunkt 41 schwenkbarer Greifer 40. Um den gleichen Drehpunkt 41 ebenfalls schwenkbar ist ein Abtaster 90 für die Oberseite 91 einer von dem Greifer 40 mitzunehmenden Kiste 1. Der Abtaster 90 schwenkt bei dem gezeigten Ausführungsbeispiel aufgrund seiner Schwerkraft im Uhrzeigersinn aus, wenn er daran nicht von einer Kiste 1 gehindert ist (vgl. Fig. 10). Die Schwenkbewegung des Abtasters 90 und des Greifers 40 sind normalerweise miteinander gekoppelt. Jedoch ist der Greifer gegen die Kraft einer Drehfeder ähnlich der Drehfeder 51 in Fig. 5 unter der Last einer Kiste 1 weiter ausschwenkbar als der Abtaster.

Eine Greiferrückführung 92 in Gestalt eines zweiarmigen Hebels ist um einen Drehpunkt 93 schwenkbar. Diese Greiferrückführung wird bei einer durch eine Kiste 1 erzwungenen Rückschwenkung des Abtasters 90 in Richtung entgegen dem Uhrzeigersinn mitgenommen und schwenkt dabei mit einem Rückstellarm 94 den Greifer 40 ebenfalls entgegen dem Uhrzeigersinn in seine eingefahrene Stellung gemäß Fig. 10 zwangsweise zurück, wenn der Greifer 40 aus der schon früher beschriebenen Aussparung 7 einer Kiste 1 freikommt.

Die Greifvorrichtung ist in den Fig. 10 bis 12 in drei Betriebsstellungen dargestellt, nämlich
- in einer Betriebsstellung gemäß Fig. 10, bei der die Kiste 1 sich bezüglich des Greifers in einer oberen Position befindet, in welcher sie mit ihrer in Fig. 10 linken Seitenfläche den Abtaster 90 und damit den Greifer 40 noch in einer eingedrückten, inaktiven Stellung hält,
- in einer Betriebsstellung gemäß Fig. 11, bei welcher sich der Greifer relativ zur Kiste 1 so weit nach oben bewegt hat, daß der Abtaster 90 aufgrund der Schwerkraft gegen die Oberseite 91 ausgeschwenkt ist, wobei der Greifer 40 ebenfalls in eine Stellung zum Hintergreifen der Aussparung 7 ausgeschwenkt ist, und
- in einer Betriebsstellung gemäß Fig. 12, bei welcher die Greifvorrichtung relativ zur Kiste soweit nach oben gefahren ist, daß die Kiste sich unter weiterem Ausschwenken des in die Aussparung 7 eingerasteten Greifers 40 gegen eine untere, zur Zentrierung dienende Schrägfläche 420 der Greifvorrichtung 16 angelegt hat.

Die beschriebene Greifvorrichtung ist in sämtlichen Ausführungen gemäß den Fig. 13 bis 15, 16 und 17 vorgesehen. Ihre Funktion wird anhand der nachfolgenden Beschreibung dieser Figuren noch besser verständlich.

In den Fig. 13 bis 15 ist eine Stapel- und Entstapelvorrichtung dargestellt, wobei der Pfeil a die Laufrichtung beim Stapelbetrieb der hier ebenfalls als Kettenpaar 2, 2 ausgebildeten Fördervorrichtung bezeichnet, während der Pfeil b die Laufrichtung beim Entstapeln bezeichnet.

Die Greifvorrichtung 16 ist so ausgebildet, wie anhand der Fig. 10 bis 12 beschrieben, und hier nicht nochmals im einzelnen erläutert. Aus den Fig. 13 bis 17 ist ersichtlich, wie die Greifvorrichtungen 16 mittels der Führungshebel 82, 84 in den Führungsabschnitten 710a, 710b, 711 und 712 geführt sind. Die Führungsabschnitte 720a/b, 711 und 712 sind längs der insgesamt dreieckförmigen Förderbahn der Ketten 2, 2 etwa parallel einem schrägen Förderabschnitt 210, einem vertikalen Förderabschnitt 211 und einem horizontalen Förderabschnitt 212 angeordnet. Die Führungsabschnitte haben jeweils konvergierende Einlaufabschnitte und divergierende Auslaufabschnitte, die bezüglich der Hauptrichtung der Führungsabschnitte abgewinkelt sein können. Die Zwischenabstände zwischen den Abschnitten sind so bemessen, daß die Greifvorrichtung 16 stets geführt ist, und zwar entweder über den einen Führungshebel 82 oder den anderen Führungshebel 84 und zeitweise mittels beider Führungshebel in zwei aneinander anschließenden Führungsabschnitten. So ist die Greifvorrichtung 16 in den Führungsabschnitten 710a und 710b über den Führungshebel 82 geführt, während sie im vertikalen Führungsabschnitt über den Führungshebel 84 geführt ist. Im horizontalen Führungsabschnitt 712 ist die Greifvorrichtung dann wieder über den Führungshebel 82 geführt.

Um ein Verkanten der Greifvorrichtung 16 zu vermeiden, sind die Führungsabschnitte an verschiedenen Stellen unterbrochen und so ausgestaltet, daß die Führung von dem einen auf den anderen der beiden Führungshebel 82,84 wechselt. Dies ist z.B. bei 715 zwischen den beiden Führungsabschnitten 710a und 710b der Fall, wo die Führung der Greifvorrichtung 16 vom Führungshebel 82 auf den Führungshebel 84 wechselt. An dieser Stelle fährt der Greifer 40 in die Aussparung 7 des Gutes 1 ein und nimmt dieses auf, wie dies in den Fig. 11 und 12 im einzelnen dargestellt ist. Oberhalb des Führungsabschnittes 710b gibt es einen zusätzlichen gekrümmten Abschnitt 710c, welcher vor dem Übergang zum vertikalen Führungsabschnitt 711 einen Wechsel der Führung vom Führungshebel 84 auf den Führungshebel 82 herbeiführt, worauf dann wieder ein Wechsel auf den Führungshebel 84 im Führungsabschnitt 711 erfolgt.

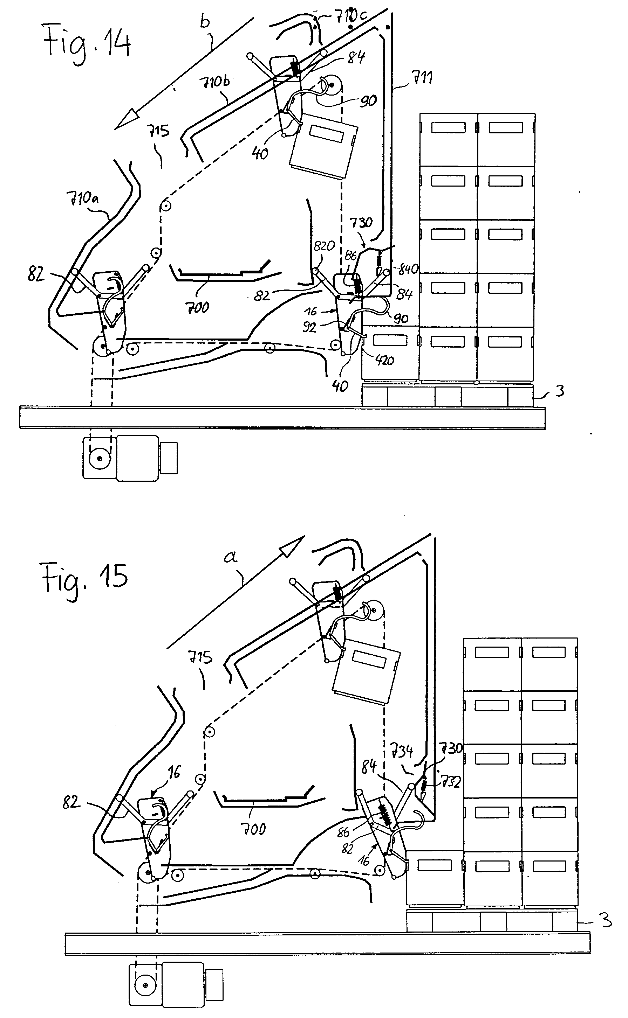

Der untere Endbereich des vertikalen Führungsabschnittes 711 bildet einen horizontal zum vertikalen Förderabschnitt 211 hin sich öffnenden Mündungsabschnitt 713, in welchem ein winkelförmiger Weichenabschnitt 730 um einen Drehpunkt 731 gegen die Rückstellkraft einer Feder 732 schwenkbar angeordnet ist. Auf diesem Weichenabschnitt läuft der Führungshebel 84 der Greifvorrichtung 16 beim Stapelbetrieb auf und schwenkt dabei den Weichenabschnitt im Gegenuhrzeigersinn, so daß ein Auslauf 734 zum Herausgleiten des Führungshebels 84 freigegeben wird. Der Weichenabschnitt ist wie in den Figuren 13 - 15 gezeigt, so gestaltet, daß die Greifvorrichtung 16 in eine solche Schräglage versetzt wird, daß die von ihr getragene Kiste 1 in korrekte Endlage auf der Palette 3 abgesetzt wird (Fig. 15). Umgekehrt wird beim Entstapelbetrieb vom unteren Ende des Weichenabschnitts 730 ein Einlauf 735 freigegeben, über welchen der Hebel 84 der Greifvorrichtung 16 so in den horizontalen Mündungsabschnitt einläuft, daß die Greifvorrichtung in der in Fig. 14 gezeigten Weise eine Kiste 1 von der Palette 3 aufnehmen kann und anschließend in einer Schräglage (Fig. 17) im vertikalen Führungsabschnitt 711 nach oben mitnimmt.

Somit ist die Stapel- und Entstapelvorrichtung nach den Figuren 13 - 15 sowohl zum Stapeln als auch zum Entstapeln verwendbar.

Es kommt jedoch in der Praxis auch vor, daß eine Vorrichtung ausschließlich zum Stapeln oder ausschließlich zum Entstapeln eingesetzt werden sollen.

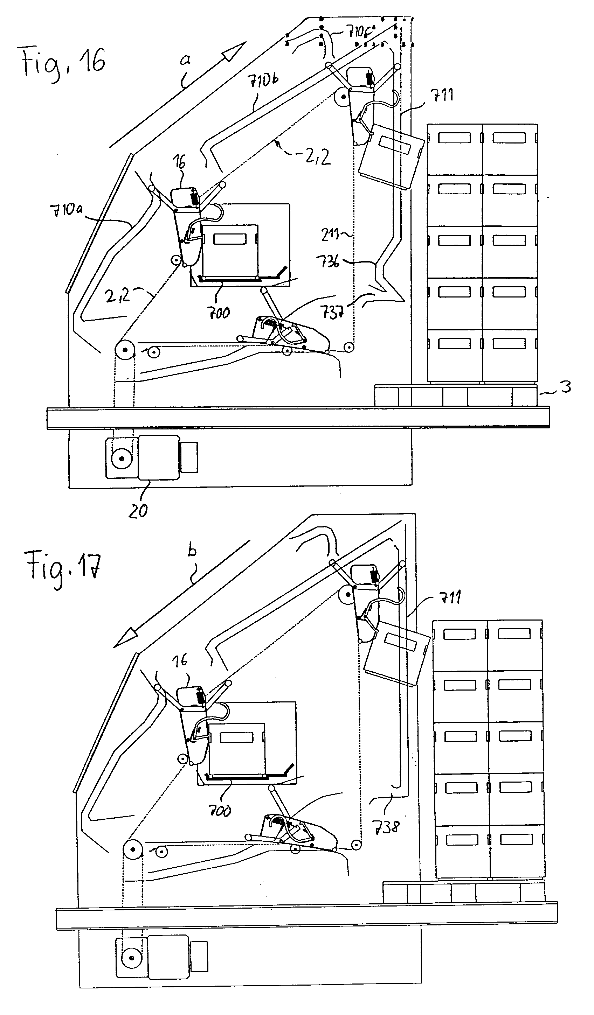

Beispielsweise wird in einer typischen Palettierstraße unter Einsatz einer reinen Stapelvorrichtung und einer reinen Entstapelvorrichtung Leergut gestapelt auf einer Palettenbahn angeliefert, mit der Entstapelvorrichtung entladen und zu einer Waschstation sowie anschließend zu einer Füllstation weiter transportiert. Das gefüllte Gut wird dann mit der Entstapelvorrichtung gestapelt und ist neu zum Abtransport bereit. Die vom Leergut befreite Palette wird dabei zum erneuten Bestapeln direkt wieder der Stapelvorrichtung zugeführt. Solche nur zum Stapeln oder Entstapeln eingesetzte Vorrichtungen sind in den Figuren 16 und 17 gezeigt und gegenüber der Stapel- und Entstapelvorrichtung nach den Fig. 13 bis 15 dadurch vereinfacht, daß der Führungsabschnitt 711 in seinem unteren Endbereich vereinfacht unter Weglassen der Weichenvorrichtung ausgebildet ist. Dabei ist der Führungsabschnitt für eine Stapelvorrichtung anders als für eine Entstapelvorrichtung ausgebildet, wie dies die Fig. 16 und 17 zeigen.

In Fig. 16 ist eine Stapelvorrichtung gezeigt, bei der also ausschließlich in Pfeilrichtung a gearbeitet wird (Antrieb des Kettenpaares im Uhrzeigersinn), wobei Kisten 1 von einer Rollbahn 700 aufgenommen und auf einer Palette 3 gestapelt werden. Bis auf den unteren Endbereich des vertikalen Führungsabschnittes sind alle Baugruppen gleich wie bei den Fig. 13 bis 15 ausgebildet und deshalb nicht nochmals beschrieben.

Der vertikale Führungsabschnitt 711 geht zum unteren Ende hin in eine schräg nach innen zunächst zum Förderabschnitt 211 hin und dann nach einer kurzen Vertikalstrecke wieder davon weggebogenen Abschnitt 736 über, um schließlich in einen horizontal zum Förderabschnitt 211 hin sich öffnenden Mündungsabschnitt 737 auszulaufen. Dies gewährleistet, daß der Führungshebel 84 eine Bahn exakt gleich derjenigen durchläuft, die durch den Weichenabschnitt 730 in dessen nach unten ausgeschwenkter Lage vorgegeben ist.

Noch einfacher ist die Ausführung des Führungsabschnittes 711 im unteren Endbereich bei der Ausführung der Vorrichtung als Entstapelvorrichtung gemäß Fig. 17, welche ausschließlich in Pfeilrichtung b fördert. Dort ist der vertikale Führungsabschnitt 711 im unteren Endbereich zu einem horizontalen Mündungsabschnitt 738 umgebogen, der sich zum Förderabschnitt 211 hin öffnet. Hierdurch ist für den Führungshebel 84 und damit für die Greifvorrichtung 16 eine Bahn vorgegeben, wie sie sich für den Führungshebel 84 genauso bei der Stapel- und Entstapelvorrichtung im Entstapelbetrieb gemäß Fig. 14 ergibt.

## Patentansprüche

1. Vorrichtung zum Stapeln oder Entstapeln von stapelbarem Gut (1) mit mindestens einer an einer endlosen Fördervorrichtung (2,2) angeordneten Greifvorrichtung (16), welche das Gut (1) mittels eines mit einer Greiferaufnahme (7) zusammenwirkenden Greifers (40) in einem ansteigenden Förderabschnitt (210) aufnimmt und in einem absteigenden Förderabschnitt (211) absetzt, dadurch **gekennzeichnet**, daß der oder jeder Greifer (40) so angeordnet ist, daß er das Gut (1) an einer einzigen Seite ergreift, wobei der Greifer in Bewegungsbahn der Fördervorrichtung unterschiedliche Lagen zum Aufnehmen, Fördern und Absetzen des Gutes gebracht wird, und daß jede Greifvorrichtung (16) eine Zentriervorrichtung (42) aufweist, welche das abgesetzte Gut (1) seitlich in eine Absetzposition verlagert.

2. Vorrichtung nach Anspruch 2, dadurch **gekennzeichnet,** daß die Fördervorrichtung ein Paar parallele Ketten (2,2) aufweist, zwischen denen die oder jede Greifvorrichtung (16) angeordnet ist.

3. Vorrichtung nach Anspruch 1 oder 2, dadurch **gekennzeichnet,** daß mehrere Greifvorrichtungen (16) um horizontale Achsen gegen Federkraft schwenkbar an der Fördervorrichtung (2,2) angebracht sind.

4. Vorrichtung nach einem der Ansprüche 1 bis 3, dadurch **gekennzeichnet,** daß die oder jede Greifvorrichtung (16) mit mindestens einem Führungshebel (82,84) versehen ist, dessen freies Ende (820,840) in Führungen geführt ist, die längs Teilabschnitten der Bewegungsbahn der Fördervorrichtung (2,2) so angeordnet sind, daß die Greifvorrichtung in zum Aufnehmen, Fördern und Absetzen geeignete Lagen relativ zur Förderbahn gebracht wird.

5. Vorrichtung nach Anspruch 4, dadurch **gekennzeichnet**, daß insgesamt zwei Führungshebel (82,84) vorgesehen sind, von denen einer starr und der andere gegen die Kraft einer Feder (86) verschwenkbar an der Greifvorrichtung (16) angeordnet ist.

6. Vorrichtung nach einem der Ansprüche 1 bis 5, dadurch **gekennzeichnet**, daß an jeder Greifvorrichtung (16) mindestens ein ausschwenkbarer Greifer (40) zum Erfassen bereitgestellten Gutes (1) angelenkt ist.

7. Vorrichtung nach Anspruch 6, dadurch **gekennzeichnet**, daß der Greifer (40) einen hakenartigen Greiferkopf (58) zum Eindringen in eine Aussparung (7) des Gutes (1) und Hintergreifen dieser Aussparung aufweist.

8. Vorrichtung nach Anspruch 6 oder 7, dadurch **gekennzeichnet**, daß jede Greifvorrichtung (16) einen Abtaster (90) für die Gutoberseite (91) aufweist, der schwenkbar an der Greifvorrichtung angelenkt ist und den Greifer zum Aufnehmen bzw. Absetzen des Gutes mitnimmt.

9. Vorrichtung nach einem der Ansprüche 6 bis 8, dadurch **gekennzeichnet**, daß der Greifer gegen Federkraft ausschwenkbar ist.

10. Vorrichtung nach einem der Ansprüche 6 bis 9, dadurch **gekennzeichnet**, daß eine von dem Abtaster gesteuerte Greiferrückführung (92) vorgesehen ist, welche den Greifer bei vollständig aus der Förderbahn herausgeschwenktem Abtaster (90) zwangsweise von dem Gut wegschwenkt.

11. Vorrichtung nach einem der Ansprüche 4 bis 10, dadurch **gekennzeichnet**, daß je eine Zentriervorrichtung (42) an jeder Greifvorrichtung (16) für das Gut (1) angeordnet ist, welche eine seitliche Schubkraft auf das Gut (1'') ausübt.

12. Vorrichtung nach Anspruch 11, dadurch **gekennzeichnet**, daß die Zentriervorrichtung von einer Schrägfläche (420) an der Greifvorrichtung gebildet ist.

13. Vorrichtung nach einem der Ansprüche 1 bis 12, dadurch **gekennzeichnet**, daß ein einziger Antriebsmotor (20) für den Antrieb der Fördervorrichtung, wie eines Kettenpaars (2,2) mit zwei parallelen Ketten, und aller sonstiger Baugruppen der Vorrichtung vorgesehen ist.

14. Vorrichtung nach einem der Ansprüche 4 bis 13, dadurch **gekennzeichnet**, daß die Führung im Absetzbereich bzw. Gutaufnahmebereich einer Stapelpalette (3) anschließend an einen vertikalen Führungsabschnitt (711) mit zwei parallelen Führüngsbahnen für das freie Ende des Führungshebels einen horizontalen Mündungsabschnitt hat, der sich zur Fördervorrichtung (2,2) hin öffnet, und daß in diesem horizontalen Mündungsabschnitt ein winkelförmiger Weichenabschnitt (730) gegen eine Rückstellkraft schwenkbar angeordnet ist, welcher mit seinem unteren Ende einen Einlauf (735) für den Führungshebel (84) beim Entstapelbetrieb und mit seinem oberen Ende einen Auslauf (734) beim Stapelbetrieb für den Führungshebel (84) der Greifvorrichtung (16) freigibt.

15. Verfahren zum Stapeln oder Entstapeln von stapelbarem Gut (1), bei dem das Gut von mindestens einer Greifvorrichtung (16) in einem ansteigenden Förderabschnitt (210) einer endlosen Fördervorichtung (2,2) mittels eines Greifers (40) aufgenommen und in einem absteigenden Förderabschnitt (211) abgesetzt wird, dadurch **gekennzeichnet,** daß das Gut (1) mittels des Greifers (40) an einer einzigen Seite ergriffen und an der Greifvorrichtung (16) gestützt wird und mittels einer an der Greifvorrichtung angeordneten Zentriervorrichtung (42) seitlich in die Absetzposition verlagert wird.

## Claims

1. Apparatus for stacking or unstacking stackable goods (1) comprising at least one gripper device (16) which is disposed on an endless conveyor device (2, 2) and which by means of a gripper (40) cooperating with a gripper slot (7) receives the goods (1) in an ascending conveyor section (210) and deposits the goods in a descending conveyor section (211), characterised in that the or each gripper (40) is so disposed as to engage the goods (1) at a single side, the gripper being brought into different positions relatively to the trajectory of the conveyor device, for the purpose of receiving, conveying and depositing the goods, and in that each gripper device (16) comprises a centring device (42) which shifts the deposited goods (1) laterally into a deposited position.

2. Apparatus according to claim 2, characterised in that the conveyor device comprises a pair of parallel chains (2, 2) between which the or each gripper device (16) is disposed.

3. Apparatus according to claim 1 or 2, characterised in that a plurality of gripper devices (16) are mounted on the conveyor device (2, 2) so as to be pivotable about horizontal axes against spring force.

4. Apparatus according to any one of claims 1 to 3, characterised in that the or each gripper device (16) is provided with at least one guide lever (82, 84), the free end (820, 840) of which is guided in guides which are so disposed along partial sections of the trajectory of the conveyor device (2, 2) that the gripper device is brought into suitable positions relatively to the conveyor trajectory for receiving, conveying and depositing the goods.

5. Apparatus according to claim 4, characterised in that a total of two guide levers (82, 84) are provided which are disposed on the gripper device (16), one of them being rigid and the other pivotable against the force of a spring (86).

6. Apparatus according to any one of claims 1 to 5, characterised in that at least one swing-out gripper (40) for engaging goods (1) in readiness is articulated on each gripper device (16).

7. Apparatus according to claim 6, characterised in that the gripper (40) comprises a hook-shaped gripper head (58) for penetrating into a recess (7) of the goods (1) and engaging behind said recess.

8. Apparatus according to claim 6 or 7, characterised in that each gripper device (16) comprises a sensor (19) for the top (91) of the goods, such sensor being pivotally articulated on the gripper device and entraining the gripper for the purpose of receiving and depositing the goods.

9. Apparatus according to any one of claims 6 to 8, characterised in that the gripper is adapted to swing out against spring force.

10. Apparatus according to any one of claims 6 to 9, characterised in that a gripper return means (92) is provided, which is controlled by the sensor and which positively swings the gripper away from the goods when the sensor (90) is completely swung out of the conveyor trajectory.

11. Apparatus according to any one of claims 4 to 10, characterised in that a centring device (42) is provided on each gripper device (16) for the goods (1) and exerts a lateral pushing force on the goods (1'').

12. Apparatus according to claim 11, characterised in that the centring device is formed by an oblique surface (420) on the gripper device.

13. Apparatus according to any one of claims 1 to 12, characterised in that a single drive motor (20) is provided to drive the conveyor device, such as a pair of chains (2, 2) with two parallel chains, and all the other assemblies of the apparatus.

14. Apparatus according to any one of claims 4 to 13, characterised in that the guide system in the deposition zone and in the goods reception zone of a stack palette (3) has, following upon a vertical guide section (711) with two parallel guide paths for the free end of the guide lever, a horizontal opening section which opens towards the conveyor device (2, 2) and in that an angular deflector section (730) is disposed in said horizontal opening section so as to be pivotable against a restoring force and the bottom end of which frees an inlet (735) for the guide lever (84) for unstacking operation while the top end frees an outlet (734) during stacking operation for the guide lever (84) of the gripper device (16).

15. A method of stacking or unstacking stackable goods (1), wherein by means of a gripper (40) the goods are received by at least one gripper device (16) in an ascending conveyor section (210) of an endless conveyor device (2, 2) and deposited in a descending conveyor section (211), characterised in that the goods (1) are engaged by means of the gripper (40) at a single side and are supported at the gripper device (16) and are shifted laterally into the deposited position by means of a centring device (42) disposed on the gripper device.

## Revendications

1. Dispositif pour empiler ou désempiler un article empilable (1), comportant au moins un dispositif de saisie (16) qui est disposé sur un dispositif de transport sans fin (2,2), qui, au moyen d'un organe de saisie (40) coopérant avec un réceptacle de saisir (7), reçoit l'article (1) sur un tronçon ascendant (10) du transporteur et dépose l'article (1) sur un tronçon descendant (211) du transporteur, caractérisé par le fait que le, ou chaque, organe de saisie (40) est disposé de façon à saisir l'article (1) d'un seul côté, l'organe de saisie étant amené, par rapport au trajet du dispositif de transport, en différentes positions pour recevoir, transporter et déposer l'article, et que chaque dispositif de saisie (16) présente un dispositif de centrage (32) qui décale latéralement, dans une position de dépôt, l'article déposé (1).

2. Dispositif selon la revendication 2, caractérisé par le fait que le dispositif de transport présente une paire de chaînes parallèles (2, 2) entre lesquelles est disposé le, ou chaque, dispositif de saisie (16).

3. Dispositif selon la revendication 1 ou 2, caractérisé par le fait que plusieurs dispositifs de saisie (16) sont places sur le dispositif de transport (2, 2) avec liberté de pivoter autour d'axes horizontaux, à l'encontre de la force d'un ressort.

4. Dispositif selon l'une des revendications 1 à 3, caractérisé par le fait que le, ou chaque, dispositif de saisie (16) est muni d'au moins un levier de guidage (82, 84) dont l'extrémité libre (820, 840) est guidée dans des guides qui sont disposés le long de tronçons partiels du trajet du dispositif de transport (2,2) de façon telle que le dispositif de saisie est amené, par rapport au trajet, dans des positions convenant pour recevoir, transporter et déposer.

5. Dispositif selon la revendication 4, caractérisé par le fait qu'au total sont prévus deux leviers de guidage (82, 84) dont l'un est disposé rigidement sur le dispositif de saisie (16) et dont l'autre l'est avec liberté de pivoter à l'encontre de la force d'un ressort (86).

6. Dispositif selon l'une des revendications 1 à 5, caractérisé par le fait que sur chaque dispositif de saisie (16) est articulé au moins un organe de saisie (40) qui peut pivoter vers l'extérieur pour saisir l'article (1) prêt à prendre.

7. Dispositif selon la revendication 6, caractérisé par le fait que l'organe de saisie (40) présente une tête de saisie (58) en forme de crochet pour pénétrer dans un évidement (7) de l'article et saisir cet évidement par derrière.

8. Dispositif selon la revendication 6 ou 7, caractérisé par le fait que chaque dispositif de saisie (16) présente, pour la face supérieure (91) de l'article, un palpeur (90) qui est articulé avec liberté de pivotement sur le dispositif de saisie et entraîne l'organe de saisie pour recevoir ou déposer l'article.

9. Dispositif selon l'une des revendications 6 à 8, caractérisé par le fait que l'organe de saisie peut pivoter vers l'extérieur à l'encontre de la force d'un ressort.

10. Dispositif selon l'une des revendications 6 à 9, caractérisé par le fait qu'est prévu un guide de rappel(92) de l'organe de saisie, qui est commandé par le palpeur et qui, lorsque le palpeur (90) a complètement pivoté hors du trajet, fait pivoter l'organe de saisie pour l'écarter coercitivement de l'article.

11. Dispositif selon l'une des revendications 4 à 10, caractérisé par le fait que sur chaque dispositif de saisie (16) pour l'article (1) est disposé un dispositif de centrage (42) qui exerce sur l'article (1'') une force de poussée latérale.

12. Dispositif selon la revendication 11, caractérisé par le fait que le dispositif de centrage est formé d'une surface oblique (420) prévue sur le dispositif de saisie.

13. Dispositif selon l'une des revendications 1 à 12, caractérisé par le fait qu'est prévu un unique moteur d'entraînement (20) pour l'entraînement du dispositif de transport tel qu'une paire de chaînes (2,2) comportant deux chaînes parallèles, et de tous les autres sous-ensembles du dispositif.

14. Dispositif selon l'une des revendications 4 à 13, caractérisé par le fait que, dans la zone de dépôt ou dans la zone de réception de l'article d'une palette empilable (3), à la suite d'un tronçon de guidage vertical (711) présentant deux chemins parallèles de guidage pour l'extrémité libre du levier de guidage, le guide comporte un tronçon d'ouverture horizontal qui s'ouvre en direction du dispositif de transport (2,2) et que sur ce tronçon d'ouverture horizontal est disposé, avec liberté de pivoter à l'encontre d'une force de rappel, un tronçon d'aiguillage en équerre (730) qui, par son extrémité inférieure, lors du désempilage, libère une entrée (735) pour le levier de guidage (84) et qui, par son extrémité supérieure, lors de l'empilage, libère une sortie (734) pour le levier de guidage (84) du dispositif de saisie (16).

15. Procédé pour empiler ou désempiler un article empilable (1), dans le cas duquel, sur un tronçon ascendant (210) d'un dispositif de transport sans fin (2,2), l'article est reçu par au moins un dispositif de saisie (16) au moyen d'un organe de saisie (40) et, sur un tronçon descendant (211), est déposé, caractérisé par le fait que l'article (1) est saisi d'un seul côté au moyen de l'organe de saisie (40) et s'appuie contre le dispositif de saisie (16) et est décalé latéralement dans la position de dépôt au moyen d'un dispositif de centrage (42) disposé sur le dispositif de saisie.
